# EUROPEAN PATENT APPLICATION

(11) **EP 1 424 583 A2**
(43) Date of publication of application: **02.06.2004**
(21) Application number: 03026635.7
(22) Date of filing: 19.11.2003
(51) Int. Cl.: G02B 26/02, G02B 6/43

(54) **Optical receiver and optical transmitter using a variable optical attenuator, and method for producing a variable optical attenuator**

(30) Priority: 26.11.2002 KR 2002074096; 22.04.2003 KR 2003025458; 25.04.2003 KR 2003026464
(71) Applicant: LG Electronics Inc., Seoul (KR)
(72) Inventor: Yee, Young-Joo, Bundang-Gu Seongnam Gyeonggi-Do (KR); Ji, Chang-Hyeon, Seocho-Gu Seoul (KR); Lim, Tae-Sun, Suwon Gyeonggi-Do (KR); Song, Ki-Chang, Anyang Gyeonggi-Do (KR); Bu, Jong-Uk, Boondang-Gu Seongnam Gyunggi-Do (KR)
(74) Representative: Vetter, Ewald Otto

(57) **Abstract**

An optical receiver and an optical transmitter and a producing method thereof using a variable optical attenuator includes a base member formed in a predetermined shape; an input optical fiber emitting an optical signal toward the base member; an optical receiving means provided at one side of the base member, and receiving an optical signal; and a variable optical attenuator actuated by an electrostatic force, changing a path of laser emitted from the input optical fiber, and thus adjusting optical power made to be incident to the optical receiving means. Positions of the input optical fiber and the optical receiving means can be changed, and the variable optical attenuator can be produced by a MEMS technology so that the variable optical attenuator can be produced with a low unit price, actuated with small electric power, and can transmit an accurate optical signal.

## Description

### BACKGROUND OF THE INVENTION

### 1. Field of the Invention

The present invention relates to an optical receiver, an optical transmitter using a variable optical attenuator, and a method for producing a variable optical attenuator, and more particularly, to an optical receiver, an optical transmitter using a variable optical attenuator, and a method for producing a variable optical attenuator whose size and production cost are small, and capable of being actuated at a high-speed with small electric power and transmitting an accurate optical signal.

### 2. Description of the Background Art

Recently, a computer and a communication technology have been rapidly developed through a high-speed optical fiber communication technology capable of transmitting/receiving a great quantity of information. Especially, high-speed transmission of multimedia information including various data, an interactive communication environment, and an increase of the number of members diffuse a use of a communication network using an optical signal in which a high carrier frequency can be transmitted at a high-speed with overcoming the limitation of a communication network using an existing copper wire.

With the development in an optical communication network technology, an importance of a variable optical attenuator is being emphasized because each device forming an optical communication network has to process optical power of a wide range from great optical power amplified at a transmitter to small optical power applied to a receiver

A fixed optical attenuator for decreasing an intensity of laser emitted through a short distance optical fiber transmission network at an overly high degree so as to be proper to be received at a photosphere is used widely. A variable optical attenuator is being developed for controlling or restoring a relative ratio of optical power for each channel having a predetermined frequency range in an optical communication network adopting a wavelength division multiplexing method.

A conventional variable optical attenuator adjusts optical power made to be incident to an output optical fiber by using the methods of: dislocating optical axes of an optical fiber of an input block and that of an output block by mechanically moving at least one of an input optical fiber or an output optical fiber; adjusting liquid crystal, an interferometer or the like by inserting the liquid crystal, the interferometer or the like which can adjust an optical transmittance, between an optical fiber of an input block and an optical fiber of an output block whose optical axes are aligned; or adjusting a transmittance characterization of an optical waveguide by inserting the optical waveguide between an input block and an output block.

However, in the optical attenuator adopting the method of using a mechanical displacement, power is much consumed in driving a mechanical actuator part, an actuating speed thereof is slow, a precision in actuating is low, and it can not be miniaturized since the size of the mechanical actuator part is relatively large. In the method of using liquid crystal or an interferometer, an optical loss is great. In the method of using an optical waveguide, power is much consumed, an optical signal may be distorted since ratios of loss generated according to a wavelength and a polarization of an input optical signal are different by nature of the optical waveguide.

### SUMMARY OF THE INVENTION

Therefore, an object of the present invention is to provide an optical receiver, an optical transmitter using a variable optical attenuator, and a method for producing a variable optical attenuator whose size and production cost are small, and capable of being actuated at a high-speed with small electric power and transmitting an accurate optical signal.

To achieve these and other advantages and in accordance with the purpose of the present invention, as embodied and broadly described herein, there is provided an optical receiver using a variable optical attenuator including a base member formed in a predetermined shape; an input optical fiber 200 emitting an optical signal toward the base member; an optical receiver provided at one side of the base member, and receiving an optical signal; and a variable optical attenuator actuated by an electrostatic force, changing a path of laser emitted from the input optical fiber 200, and thus adjusting optical power made to be incident to the optical receiving means.

To achieve these and other advantages and in accordance with the purpose of the present invention, as embodied and broadly described herein, there is provided a an optical transmitter using a variable optical attenuator including a base member formed in a predetermined shape; an optical diode mounted at one side of the base member, and emitting an optical signal; an output optical fiber mounted at one side of the base member, and receiving an optical signal; and a variable optical attenuator actuated by an electrostatic force, changing a path of laser emitted from the optical diode, and thus adjusting optical power transmitted to the output optical fiber.

To achieve these and other advantages and in accordance with the purpose of the present invention, as embodied and broadly described herein, there is provided a method for producing a variable optical attenuator including: forming a substrate, a silicon wafer onto which an embedded insulated film layer and a silicon thin film layer is formed; patterning a low-stress insulated thin film layer at upper/lower surfaces of the substrate; forming a piezoelectric actuator part consisting of a capacitor and upper and lower electrodes by sequentially patterning a conductive lower thin film layer, a piezoelectric thin film layer and a conductive upper thin film layer on the low-stress insulated thin film layer patterned on the upper surface of the substrate; eliminating the low-stress insulated thin film layer so as to have a predetermined area at the inside of the substrate; patterning a reflection surface of a mirror part at the predetermined area where the low-stress insulated thin film layer has been eliminated; completing a micro mirror part by etching a certain area of a lower substrate, which will be the reflection surface of the mirror part; and patterning a torsion hinge portion supporting the micro mirror part.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a perspective view illustrating one embodiment of an optical receiver using a variable optical attenuator according to the present invention;
Figures 2, 3 are a plane view and a sectional view of an optical receiver using a variable optical attenuator according to the present invention respectively;
Figure 4 is a perspective view illustrating a variable optical attenuator constituting an optical receiver using a variable optical attenuator according to the present invention;
Figures 5, 6 are plane views illustrating an operational state of an optical receiver using a variable optical attenuator according to the present invention respectively;
Figure 7 is a perspective view illustrating another embodiment of an optical receiver using a variable optical attenuator according to the present invention;
Figure 8 is a perspective view illustrating a first modified example of a variable optical attenuator constituting an optical receiver using a variable optical attenuator according to the present invention;
Figure 9 is a plane view illustrating an operational state of the variable optical attenuator;
Figure 10 is a perspective view illustrating a second modified example of a variable optical attenuator constituting an optical receiver using a variable optical attenuator according to the present invention;
Figure 11 is a plane view illustrating an operational state of the variable optical attenuator;
Figures 12, 13 are perspective views illustrating a third modified example of a variable optical attenuator constituting an optical receiver using a variable optical attenuator according to the present invention respectively;
Figures 14, 15 are sectional views illustrating an operational state of the variable optical attenuator respectively;
Figures 16, 17 are a perspective view and a plane view illustrating a fourth modified example of a variable optical attenuator constituting an optical receiver using a variable optical attenuator according to the present invention respectively;
Figure 18 is a perspective view illustrating the sectioned variable optical attenuator;
Figures 19, 20 are sectional views illustrating an operational state of the variable optical attenuator respectively;
Figures 21 a to 21 p are sectional views sequentially illustrating a process of producing a variable optical attenuator of the present invention; and
Figure 22 is a plane view illustrating an optical transmitter using a variable optical attenuator according to the present invention.

### DETAILED DESCRIPTION OF THE PREFERRED EMBODIMENTS

Reference will now be made in detail to the preferred embodiments of the present invention, examples of which are illustrated in the accompanying drawings.

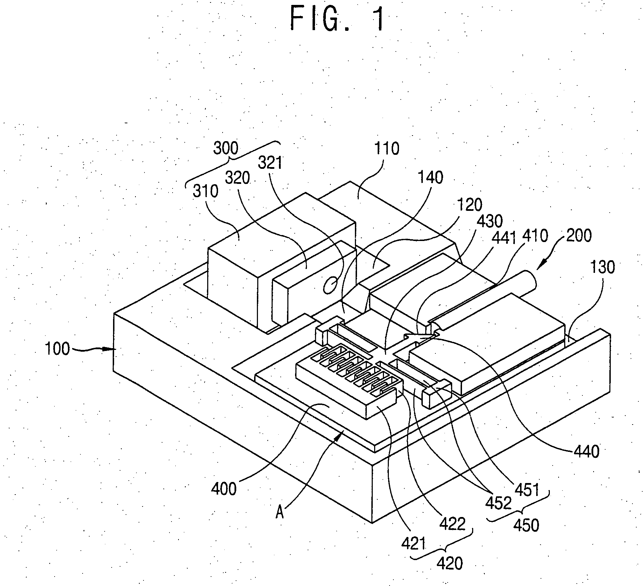

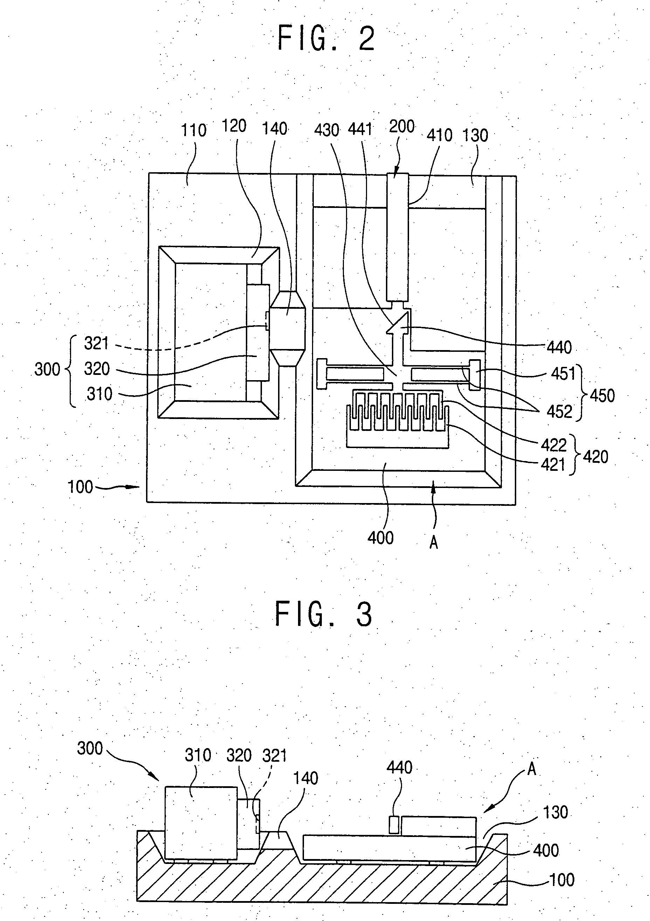

Figure 1 is a perspective view illustrating one embodiment of an optical receiver using a variable optical attenuator according to the present invention, Figure 2 is a plane view of an optical receiver using the variable optical attenuator, and Figure 3 is a sectional view of an optical receiver using the variable optical attenuator.

As shown therein, the optical receiver using the variable optical attenuator includes a base member 100 formed in a predetermined shape; an input optical fiber 200 emitting an optical signal toward the base member 100; an optical receiving means 300 provided at one side of the base member 100, and receiving the optical signal; and a variable optical attenuator A actuated by an electrostatic force, changing a path of laser emitted from the input optical fiber 200, and thus adjusting optical power made to be incident to the optical receiving means 300.

The base member 100 includes a plate portion 110 having a certain thickness and an area; an optical receiving means-mounted portion 120 at which the optical receiving means 300 is mounted, formed at one side of the plate portion 110 so as to have a certain area and a depth; a variable optical attenuator-mounted portion 130 at which the variable optical attenuator A is mounted, and formed at a side portion of the optical receiving means-mounted portion 120 so as to have a certain shape and a depth; and an optical path groove 140 making the optical receiving means-mounted portion 120 and the variable optical attenuator-mounted portion 130 communicating with each other, and through which laser is passes. The plate portion 110 is formed in a quadrangular form, and the optical receiving means-mounted portion 120 is formed in a quadrangular form with a certain depth. The variable optical attenuator-mounted portion 130 is formed in a quadrangular form with a certain depth, and its one side is opened. And the optical path groove 140 has a certain width and a depth.

The optical receiving means 300 includes a block 310 for fixing an optical diode, which is fixed to the base member 100; an optical diode provided with an optical diode active area 321 receiving laser, and mounted at the block 310 for fixing the optical diode. A lens for focusing laser may be mounted toward the active area 321 of the optical diode. The optical receiving means 300 is inserted at the optical receiving means-mounted portion 120 of the base member, and the lower portion of the optical receiving means 300 is soldered to be fixed at the optical receiving means-mounted portion 120 of the base member. At this time, the optical diode active area 321 is positioned at the optical path groove 140.

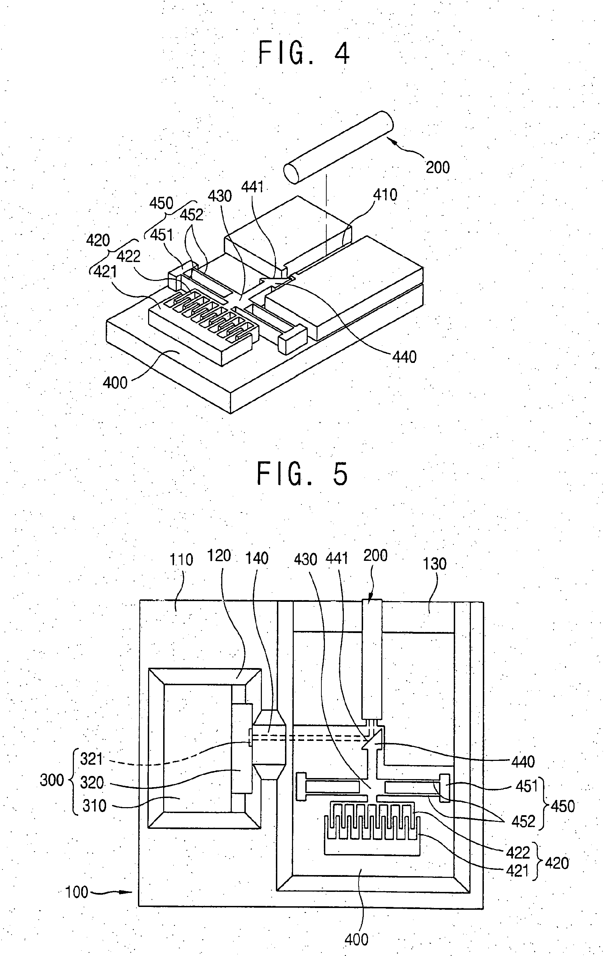

As shown in Figure 4, the variable optical attenuator A includes a substrate portion 400 having a certain area; an optical fiber-fixed portion 410 formed at one side of the substrate portion 400, and at which the input optical fiber 200 is fixed; a linear actuator part 420 formed on the substrate portion 400, and generating a linear actuation force by an electrostatic force; a body portion 430 isolated from the substrate portion 400, extended from one side of the linear actuator part 420, and moved by the linear actuator part 420; a micro mirror part 440 extended from one side of the body portion 430, and reflecting laser emitted from the input optical fiber 200 according to the movement of the body portion 430; and an elastically supporting portion 450 formed on the substrate portion 400, and elastically supporting the body portion 430.

The substrate portion 400 has a quadrangular form, and its one side surface is stepped. The optical fiber-fixed portion 410 has a groove form with a certain depth, and is positioned at the higher portion of the substrate portion 400.

The input optical fiber 200 is fixedly coupled with the optical fiber-fixed portion 410. Toward a side of the input optical fiber 200 to which the laser is outputted, a lens for focusing laser may be mounted.

The optical fiber-fixed portion 410 is formed so that the input optical fiber 200 fixed at the optical fiber-fixed portion 410 is at a right angle to the optical receiving means 300.

The linear actuator part 420 is a comb actuator which is generally used, and consists of a comb shaped fixed electrode 421 and a comb shaped movable electrode 422 inserted between the comb teeth of the fixed electrode 421.

The body portion 420 has a predetermined shape, and is formed to be integral with the movable electrode 422 of the linear actuator part. The micro mirror part 440 is extended from one side of the body portion 430 and formed in a triangular form, and its one side surface becomes a reflection surface 441. The body portion 430 and the micro mirror part 440 are aligned so as to be collinear with the optical fiber-fixed portion 410. The reflection surface 441 of the micro mirror part is formed inclined at an angle of 45 to a path of laser emitted from the optical fiber 200.

The elastically supporting portion 450 includes projections 451 formed on the substrate portion 400 and positioned at both sides of the body portion 430 respectively; and a plurality of leaf springs 452 connecting the projections 451 and the body portion 430. The leaf springs 452 are isolated from the substrate portion 400, and are positioned at both sides of the body portion 430 by two respectively.

Components of the variable optical attenuator A are integrally formed, and the variable optical attenuator whose components are integrally formed, is produced by a MEMS technology applying a lithographic technology and a micromachining technology).

In a state that the variable optical attenuator A has been inserted at the variable optical attenuator-mounted portion 130 of the base member, the variable optical attenuator A is soldered to the substrate portion 400 to be fixedly coupled with the base member 100.

Hereinafter, operations of an optical receiver using a variable optical attenuator according to one embodiment of the present invention will now be described.

First, in a state that the variable optical attenuator (A) is not in operation, when laser is emitted from an input optical fiber 200, the laser is reflected by the variable optical attenuator A, and then its entire optical power is made to be incident onto the optical receiving means 300. When the variable optical attenuator A is operated by an electrostatic force, a path of laser emitted from the input optical fiber 200 is changed, and thus a part of the optical power emitted from the input optical fiber 200 is made to be incident onto the optical receiving means 300.

The process above will now be described in detail. As shown in Figure 5, the input optical fiber 200, the micro mirror 440 part and the optical diode active area 321 are aligned so that, in an initial state that the power is not applied to a linear actuator part 420 of the variable optical attenuator, laser emitted from the input optical fiber 200 is reflected by the micro mirror part 44 and thus the entire optical power is made to be incident onto an optical diode active area 321. Accordingly, in a state that the linear actuator 420 is not in operation, the entire laser emitted from the input optical fiber 200 is made to be incident onto the optical diode active area 321.

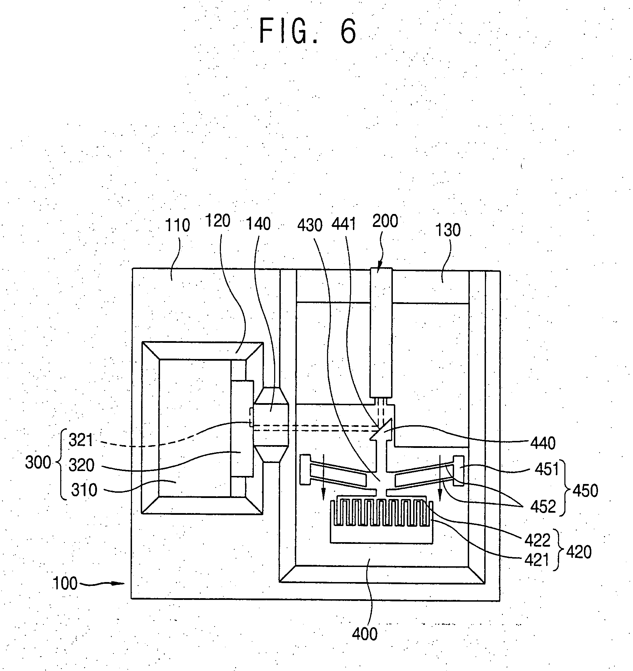

When a voltage is supplied to the linear actuator part 420, a displacement of the linear actuator part 420 occurs, and thus displacements of the body portion 430 and the micro mirror part 440 occur. As shown in Figure 6, when the displacement of the micro mirror part 440 occurs, a path of the laser reflected by the reflection surface 441 of the micro mirror part 440 is changed, whereby only a part of optical power is made to be incident to the optical diode active area 321. Thus, the optical power which is made to be incident into the optical diode active area 321, becomes small. As above, according to the displacement of the linear actuator part 420, the optical path is changed while the micro mirror part 440 is moved, and thus optical power made to be incident to the optical diode active area 321 is adjusted.

In the present invention, an optical receiving means-mounted portion 120 and a variable optical attenuator-mounted portion 130 are formed at the base plate 100. At the optical receiving means-mounted portion 120 and the variable optical attenuator-mounted portion 130, an optical receiving means 300 and a variable optical attenuator A are mounted respectively. At the variable optical attenuator A, the input optical fiber 200 is mounted. Such components are accurately aligned and thus the transmission of the laser is accurately performed.

In addition, since the components of the variable optical attenuator A are integrally formed, and the variable optical attenuator can be produced by a MEMS technology, it can be produced at a fine size. And, since the variable optical attenuator A is operated by an electrostatic force, it can be actuated at a high speed, and the power therefor is very small.

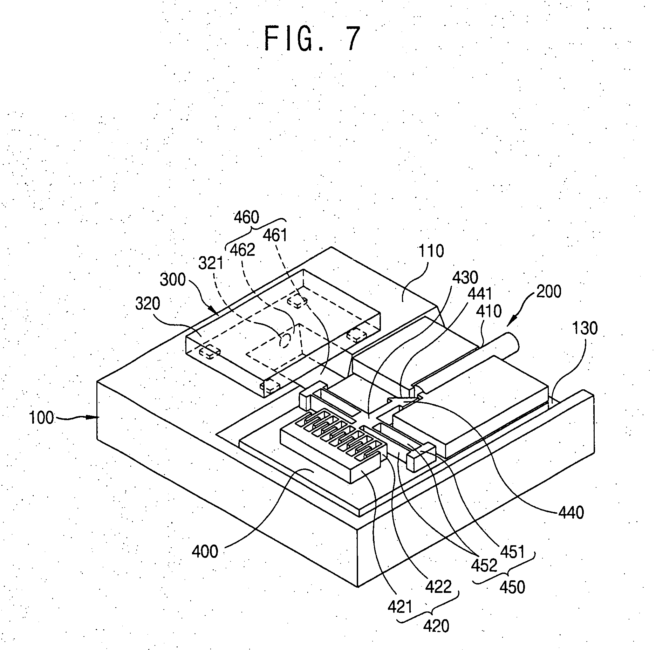

Figure 7 is a perspective view illustrating another embodiment of an optical receiver provided with a modified base member and optical receiving member, which constitutes an optical receiver using a variable optical attenuator according to the present invention. The same number will be given to the same components as those described above in the drawing.

As shown therein, a base member 100 of an optical receiver using the variable optical attenuator includes a plate portion 110 having a certain thickness and an area; a variable optical attenuator-mounted portion 130 formed at one side of the plate portion 110 so as to have a certain shape and depth, and at which the variable optical attenuator is mounted; and a fixed mirror part 460 formed at one side of the plate portion 110, and reflecting laser reflected by the variable optical attenuator to the optical receiving means 300 mounted at the plate portion 110.

The fixed mirror part 460 may be implemented in various shapes, one embodiment thereof will now be described. An optical channel 461 with a certain width and a depth is formed at the plate portion 400 to communicate with the variable optical attenuator portion 130, and one side surface of the optical channel 461 is inclined, and becomes a reflection surface 462.

The variable optical attenuator A is mounted at the variable optical attenuator mounted portion 130, a structure thereof is the same as described above. At an optical fiber-fixed portion 410 of the variable optical attenuator A, an input optical fiber 200 from which laser is emitted is mounted.

The optical receiving means 300 is an optical diode 320 having an active area 321, and the optical diode 320 is fixedly coupled with the base member 100 so that the active area 321 is positioned toward the fixed mirror part 460. At this time, the active area 321 of the optical diode is aligned so as to be collinear with the reflection surface 462 of the fixed mirror part.

In such structures, in a state that a linear actuator part 420 of the variable optical attenuator is not in operation, when laser is emitted from the input optical fiber 200, the laser is reflected by a micro mirror part 440 and is made to be incident on the fixed mirror part 460. Then, the laser is reflected by the reflection surface 462 of the fixed mirror part, and the entire optical power thereof is made to be incident to the active area 321 of the optical diode.

When the displacement of the micro mirror 440 occurs by the linear actuator part 420, a path of the laser reflected by the micro mirror part 440 is changed, and thus the optical power made to be incident to the active area 321 of the optical diode, is adjusted.

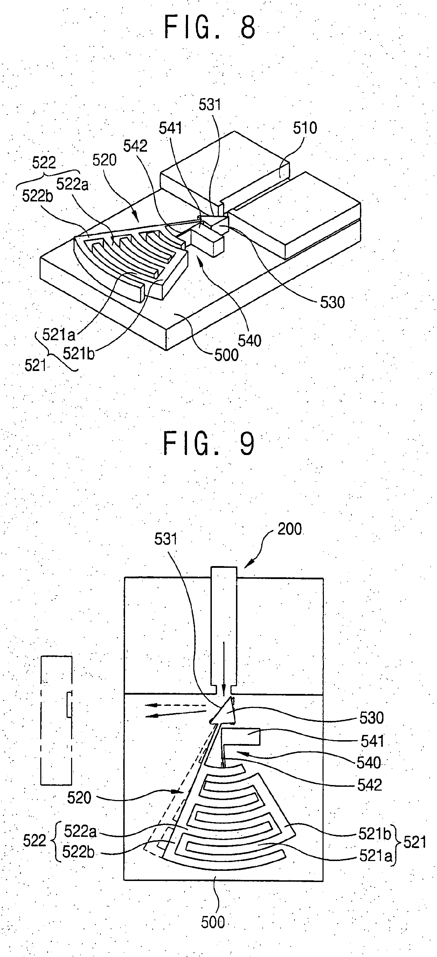

Figure 8 is a perspective view illustrating a first modified example of a variable optical attenuator according to the present invention.

As shown therein, the variable optical attenuator includes substrate portion 500 having a certain area; an optical fiber fixed portion 510 at which the input optical fiber 200 is fixed, formed at one side of the substrate portion 500; a rotary actuator part 520 formed at the substrate portion, and generating an angular movement by an electrostatic force; a micro mirror part 530 extended from the rotary actuator part 520, and reflecting laser emitted from the input optical fiber 200 while making a angular movement according to the actuation of the rotary actuator part 520; and an elastically supporting portion 540 formed at the substrate portion 500, and elastically supporting the rotary actuator part 520.

The substrate portion 500 is formed in a quadrangular form, and its one side surface is stepped. The optical fiber-fixed portion 510 has a certain depth, and is positioned at a higher portion of the substrate portion 500.

The input optical fiber 200 is coupled with the optical fiber fixed-portion 510.

The optical fiber-fixed portion 510 is formed so that the input optical fiber 200 fixed at the optical fiber-fixed portion 510 is at a right angle to the optical receiving means 300.

The rotary actuator part 520 includes a fixed electrode 521 including a plurality of circular arc comb teeth 521 a formed in a circular arc form at a certain interval therebetween and an inclination type comb teeth 521 b connected with one side end of the circular arc comb teeth 521a; and a movable electrode 522 including circular arc teeth 522a movably positioned between the circular arc comb teeth 521a of the fixed electrode 521 and a connecting shaft 522b connected with the circular arc comb teeth 522a and with the micro mirror part 530. The rotary actuator part 520 is formed toward the lower portion of the substrate portion 500, and the movable electrode 522 is isolated from the substrate portion 500.

The electrically supporting portion 540 includes a projection projected from the substrate portion 500, and a leaf spring 542 isolated from the substrate portion 500, and connected with an actuation side of the rotary actuator part 520, that is, the movable electrode 522. The leaf spring 542 is fixed at the projection 541, and elastically supporting the movable electrode 522.

The micro mirror part 530 is extended from the connecting shaft 522b of the movable electrode in a triangular form, and its inclined surface becomes a reflection surface 531. The reflection surface 531 is formed inclined at an angle of 45 to a path of laser emitted from the input optical fiber 200.

Components of the variable optical attenuator A are integrally formed, and the variable optical attenuator A whose components are integrally formed is produced by a MEMS technology. The variable optical attenuator A is fixedly coupled with the variable optical attenuator-mounted portion 130.

Operations of such structures of the variable optical attenuator will now be described with reference to Figure 9. First, the input optical fiber200, the micro mirror part 530, and the optical diode active area 321 are aligned so that, in a state that the rotary actuator part 520 is not in operation, laser emitted from the input optical fiber 200 is reflected by the micro mirror part 530, and thus the entire optical power thereof is made to be incident to an optical diode active area 321. Therefore, in a state that the linear actuator part 520 is not in operation, the entire laser emitted from the input optical fiber 200 is made to be incident to the optical diode active area 321.

In addition, when the micro mirror part 530 makes an angular rotation by the operation of the rotary actuator part 520, the path of the laser reflected by the micro mirror part 530 is changed. Thus, while the micro mirror part 530 makes an angular rotation, the optical path is changed, and thus the optical power made to be incident to the active area 321 of the optical diode is adjusted.

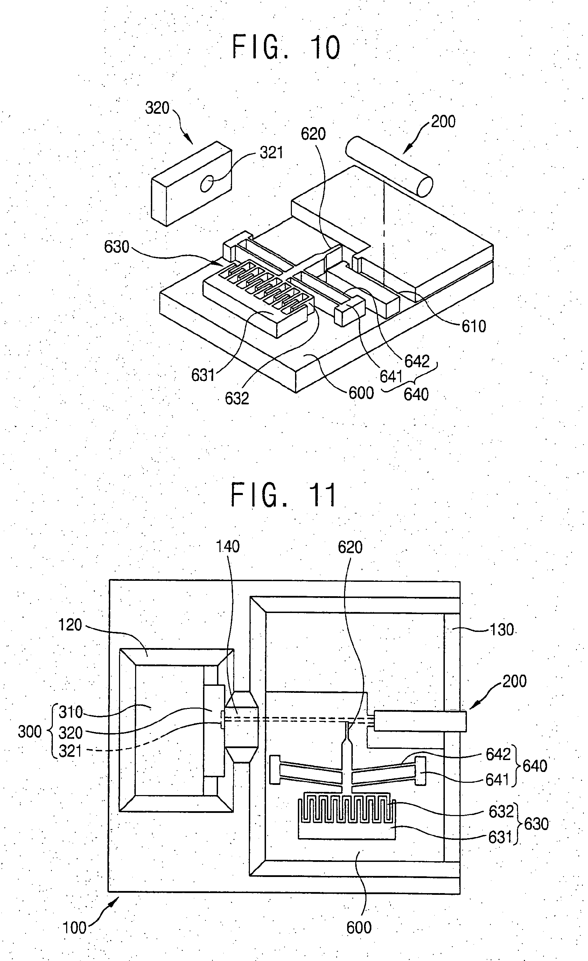

Figure 10 is a perspective view illustrating a second modified example of a variable optical attenuator according to the present invention.

As shown therein, the variable optical attenuator includes a substrate portion 600 having a certain area; an optical fiber-fixed portion 610 formed at one side of the substrate portion 600, and at which the input optical fiber 200 is fixed; a micro shutter part 620 movably positioned between the input optical fiber 200 and the optical diode 320 of the optical receiving means, and controlling that laser emitted from the input optical fiber 200 is introduced to the optical receiving means, that is, the active area 321 of the optical diode; an actuator part 630 moving the micro shutter part 620; and an elastically supporting portion 640 elastically supporting the micro shutter part 630.

The substrate portion 600 is formed in a quadrangular form, and its one side surface is stepped. The optical fiber-fixed portion 610 is formed in a groove form having a certain depth. The optical fiber-fixed portion 610 is formed at a higher portion of the substrate portion 600 so as to be collinear with the optical receiving means 300 when the substrate portion 600 is mounted at the variable optical attenuator-mounted portion 130 of the base member.

The actuator part 630 is a comb actuator, which is generally used, and consists of a comb-shaped fixed electrode 631 and a comb-shaped movable electrode 632 inserted between comb teeth of the fixed electrode 631. As described above, for the actuator part 630, the rotary actuator part may be used.

The micro shutter part 620 is extended from the one side of the movable electrode 632 in a predetermined shape, and the longitudinal direction of the micro shutter part 620 is the same as the moving direction of the movable electrode 632. In addition, the micro shutter part 620 is isolated from the substrate portion 600 so as to be moved at a right angle to the direction of laser emitted from the input optical fiber 200 mounted at the optical fiber-fixed portion 610.

The elastically supporting portion 640 consists of projections 641 formed on the substrate portion, and positioned at both sides of the micro shutter part 620 respectively; and a leaf spring 642 connecting the projections and the micro shutter part 620. The leaf spring 642 is isolated from the substrate portion 600.

Components of the variable optical attenuator are integrally formed, and the variable optical attenuator is produced by a MEMS technology. And the variable optical attenuator is mounted at the variable optical attenuator-mounted portion 130 of the base member. The input optical fiber 200 is fixedly coupled with the optical fiber-fixed portion 610 of the variable optical attenuator. At this time, the input optical fiber 200 and the optical receiving means 300 are collinearly aligned.

Operations of such structures thereof will now be described with reference to Figure 11. First, in a state that the actuator part 630 is not in operation, since the micro shutter part 620 is positioned between the input optical fiber 200 and the optical receiving means 300, laser emitted from the input optical fiber 200 is cut off by the micro shutter part 620, so no laser is transmitted to the optical receiving means 300.

Then, when the actuator part 630 operates, while the shutter part connected with the actuator part 630 is moved, a path of laser emitted from the input optical fiber 200 is partially opened. Thus, a part of the laser is made to be incident to the optical receiving means 300. In addition, if the micro shutter part 620 moves more, the optical path is more opened, and thus more laser is made to be incident to the optical receiving means 300. According to such movements of the micro shutter part 620, optical power made to be incident to the optical receiving means 300 is adjusted.

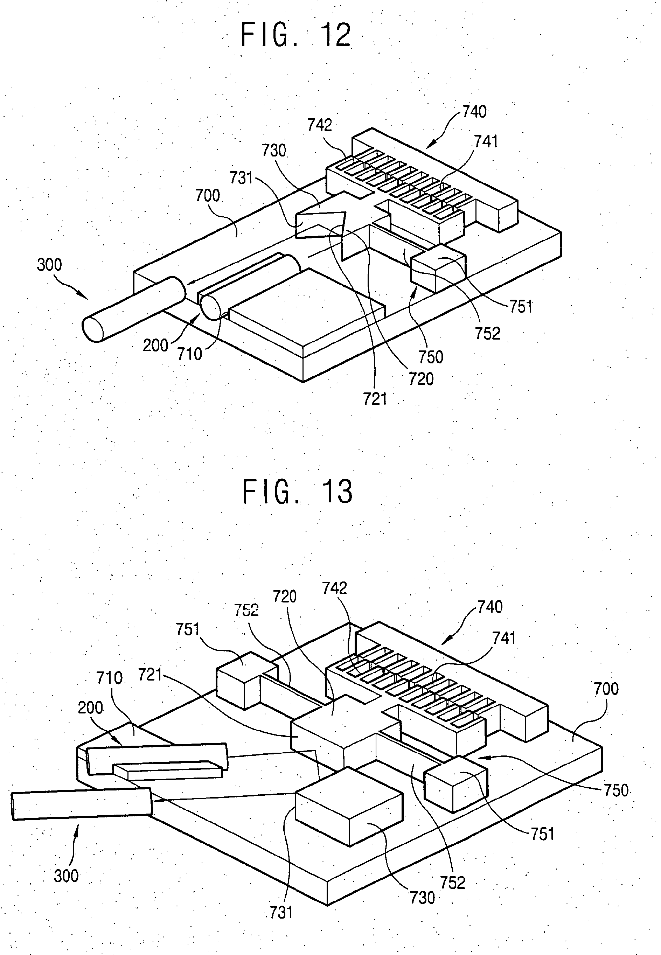

Figure 12 is a perspective view illustrating a third modified example of a variable optical attenuator according to the present invention.

As shown therein, the variable optical attenuator includes a substrate portion 700 having a certain area; an optical fiber-fixed portion 710 formed at one side of the substrate portion 700, and at which the input optical fiber 200 is fixed; an incidence side mirror part 720 reflecting laser emitted from the input optical fiber 200; an emission side mirror part 730 reflecting laser reflected from the incidence side mirror part 720 to the optical receiving means 300; an actuator part 740 actuating the incidence side mirror part 720 or the emission side mirror part 730 and thus adjusting a reflection angle of laser reflected to the optical receiving means 300; and an elastically supporting portion 750 elastically supporting the incidence side mirror part 720 or the emission side mirror part 730 actuated by the actuator part 740.

The substrate portion 700 is formed in a quadrangular form, and its one side surface is stepped. The optical fiber-fixed portion 710 is formed in a groove form with a certain depth. The optical fiber-fixed portion 710 is formed at a higher portion of the substrate portion 700 so as to be parallel to the optical receiving means 300 when the substrate portion 700 is mounted at the variable optical attenuator-mounted portion 130 of the base member. At this time, the optical receiving means 300 is an output optical fiber.

The actuator part 740 is a comb actuator, which is generally used, and consists of a comb-shaped fixed electrode 741 and a comb shaped movable electrode 742 inserted between comb teeth of the fixed electrode 741.

The incidence side mirror part 720 and the emission side mirror part 730 are integrally formed, and the incident side mirror part 720 and the emission side mirror part 730 which are integrally formed, are connected with the movable electrode 742 of the actuator part, and are isolated from the substrate portion 700. The elastically supporting portion 750 consists of a projection 751 projected from the substrate portion 700 and a leaf spring 752 isolated from the substrate portion 700 and elastically connecting the projection 751 and the incidence side mirror part 720. That is, one side of the incidence side mirror part 720 and the emission side mirror part 730, which are integrally formed, is elastically supported by the leaf spring 752.

A reflection surface 721 of the incidence side mirror part is at a right angle to a reflection surface 731 of the emission side mirror part.

In Figure 13, a modified example for an incidence side mirror part 720, an emission side mirror part 730 and an elastically supporting portion 750 are illustrated. The emission side mirror part 730 is extended and projected from the substrate portion 700 in a quadrangular form, and the incidence side mirror part 720 is movably connected to a movable electrode 742 of the actuator part. A reflection surface 721 of the incidence side mirror part is at a right angle to a reflection surface 731 of the emission side mirror part.

The elastically supporting portion 750 consists of a projection 751 formed on the substrate portion 700 and positioned at both sides of the incidence side mirror part 720 respectively and a leaf spring 752 connecting the incidence side mirror part 720 and the projection 751. The leaf spring 752 is isolated from the substrate portion 700, and elastically supports the incidence side mirror part 730.

Components of the variable optical attenuator are integrally formed, and the variable optical attenuator is produced by a MEMS technology. The variable optical attenuator is mounted at the variable optical attenuator-mounted portion 130, the input optical fiber 200 is fixedly coupled with the optical fiber-fixed portion of the variable optical attenuator.

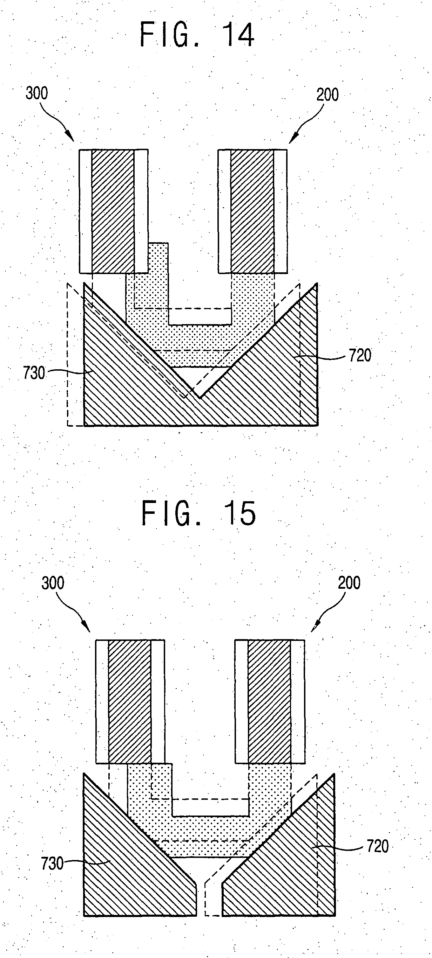

Operations of the variable optical attenuator having such structures will now be described with reference to Figures 14, 15. First, in a state that the actuator part 740 is not in operation, laser emitted from the input optical fiber 200 is reflected by the incidence side mirror part 720 and the emission side mirror part 730, and thus the entire optical power thereof is made to be incident to the optical receiving means 300, the output optical fiber. Therefore, in a state that the actuator part 740 is not in operation, the entire amount of the laser emitted from the input optical fiber 200 is made to be incident to the output optical fiber.

Then, when the actuator part 740 is in operation, while both incidence side mirror part 720 and emission side mirror part 720 move, or only the incidence side mirror part 720 moves, an optical path is changed, and thus the amounted of laser made to be incident to the output optical fiber, is adjusted.

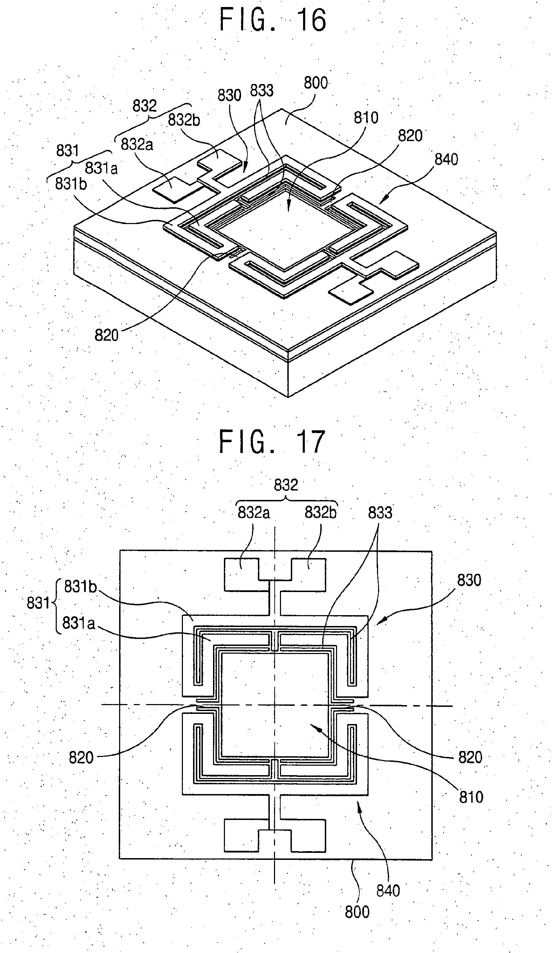

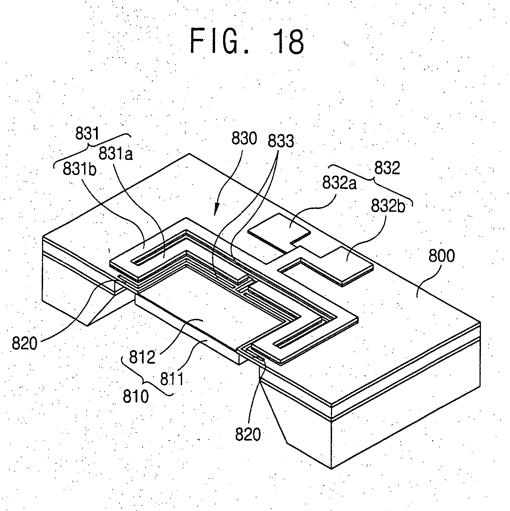

Figure 16 is a perspective view illustrating a fourth modified example of a variable optical attenuator according to the present invention, Figure 17 is a plane view of the variable optical attenuator, and Figure 18 is a sectional view of Figure 16.

As shown therein, the variable optical attenuator includes a substrate portion 800 having a certain thickness and an area; a micro mirror part 810 positioned at the inside of the substrate portion 800 and reflecting laser emitted from the input optical fiber 200; a torsion hinge portion 820 connecting the micro mirror part 810 to the substrate portion 800 so that the micro mirror part 810 can makes a tilting actuation; and a piezoelectric actuator part 830 positioned at the substrate portion 800, having the micro mirror part 810 make a tilting rotation of the micro mirror part 810 by a piezoelectric actuation, and thus adjusting a reflection angle of laser reflected to the optical receiving means.

The substrate portion 800 is formed in a quadrangular form, and the micro mirror part 810 having a quadrangular form is positioned in the middle of the substrate portion 800. The micro mirror part 810 is supported so as to make a tilting rotation by the torsion hinge portion 820. The torsion hinge portion 820 is positioned at both sides of the micro mirror part 810, and connects the micro mirror part 810 and the substrate portion 810. The micro mirror part 810 consists of a mirror plate 811 and a reflection film 812 coating the mirror plate 811.

The piezoelectric actuator part 830 includes a capacitor area 831 encompassing one side of the micro mirror part 810, and an electrode area 832 extended from the one side of the capacitor area 831. The piezoelectric actuator part 830 is a piezoelectric material made of an upper thin plate, a piezoelectric material and a lower thin plate, and is adhered to one portion of the surface of the substrate portion 800. The capacitor area 831 is formed of an inner path 831 a and an outer path 831 b encompassing the inner path 831 a, and the inner path 831 a and the outer path 831b are connected to each other. Between the inner path 831a and the micro mirror part 810, and between the inner path 831a and the outer path 831b, a slit line 833 with a predetermined shape is formed. The electrode area 832 has a lower electrode 832a formed of a lower thin plate and an upper electrode 832b formed of an upper plate, and the lower electrode 832a and the upper electrode 832b are isolated from each other.

On the basis of a central line of the micro mirror part 810, that is, on the basis of the torsion hinge portions 820, on the opposite side of the piezoelectric actuator part 830, a dummy actuator part 840 having the same shape as the piezoelectric actuator part 830 is provided. The dummy actuator part 840 offsets a residual stress of the micro mirror part 810.

Components of the variable optical attenuator are integrally formed, and the variable optical attenuator is produced by a MEMS technology. The variable optical attenuator is vertically mounted at the variable optical attenuator-mounted portion 130 of the base member, an input optical fiber 200 and an output optical fiber which is an optical receiving means 300 are fixedly mounted at the base member 100 so as to be at a certain inclination angle to the micro mirror part 810. The input optical fiber 200 and the output optical fiber are fixedly coupled so as to be symmetrical on the basis of a virtual axis, which is at a right angle to a reflection surface 812 of the micro mirror part 810.

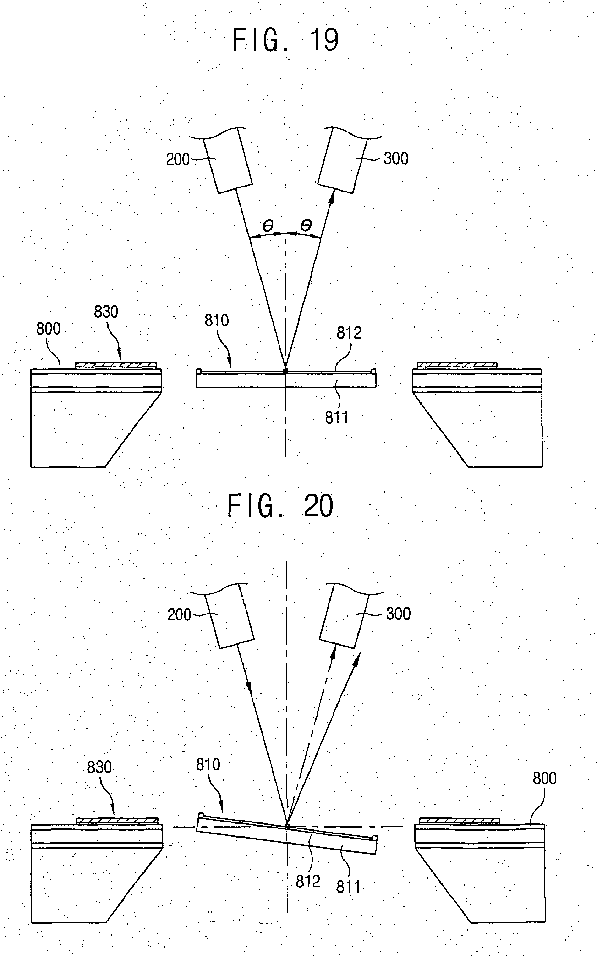

Operations of the variable optical attenuator having such structures will now be described with reference to Figure 19. First, in a state that the piezoelectric actuator part 830 is not in operation, laser emitted from the input optical fiber 200 is reflected by the micro mirror part 810, and thus the entire optical power is made to be incident to the output optical fiber. And, as shown in Figure 20, when the piezoelectric actuator part 830 is in operation, while the micro mirror part 810 makes a tilting rotation by an actuation force of the piezoelectric actuator part 830, an optical path is changed, and thus optical power made to be incident to the output optical fiber is adjusted.

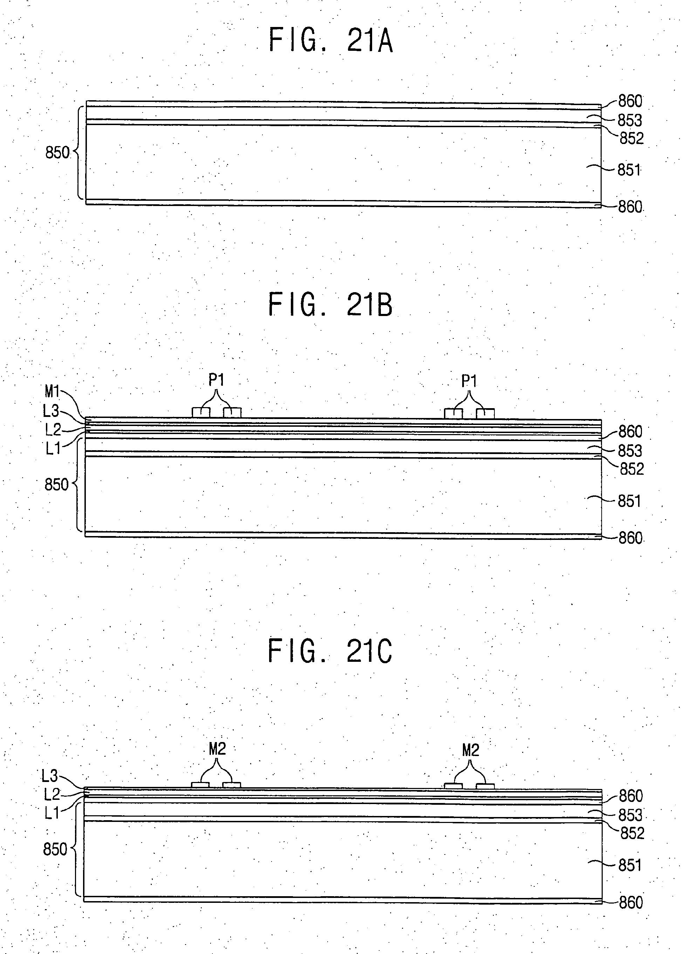

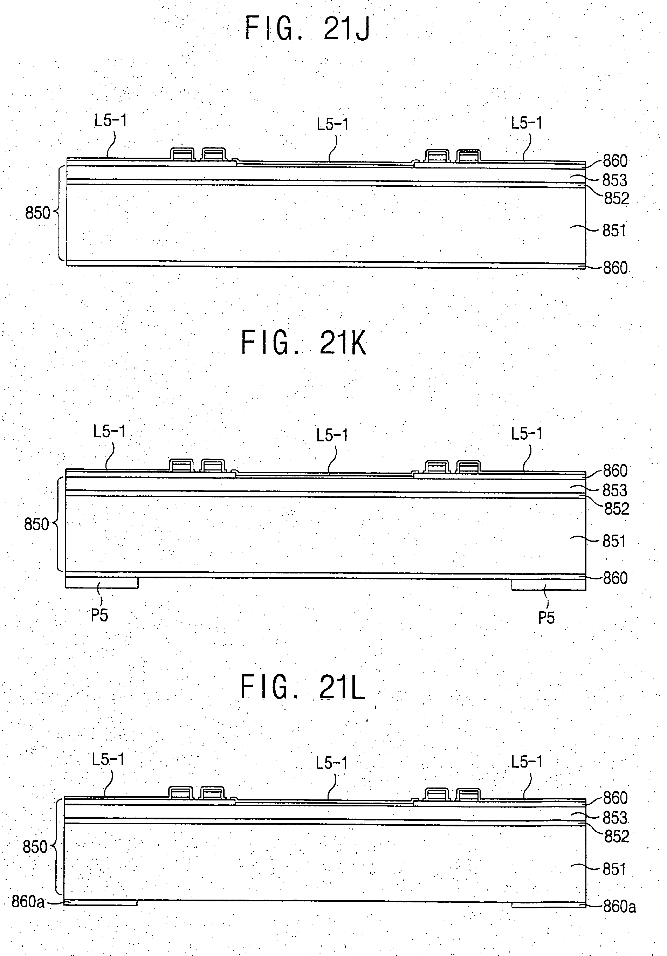

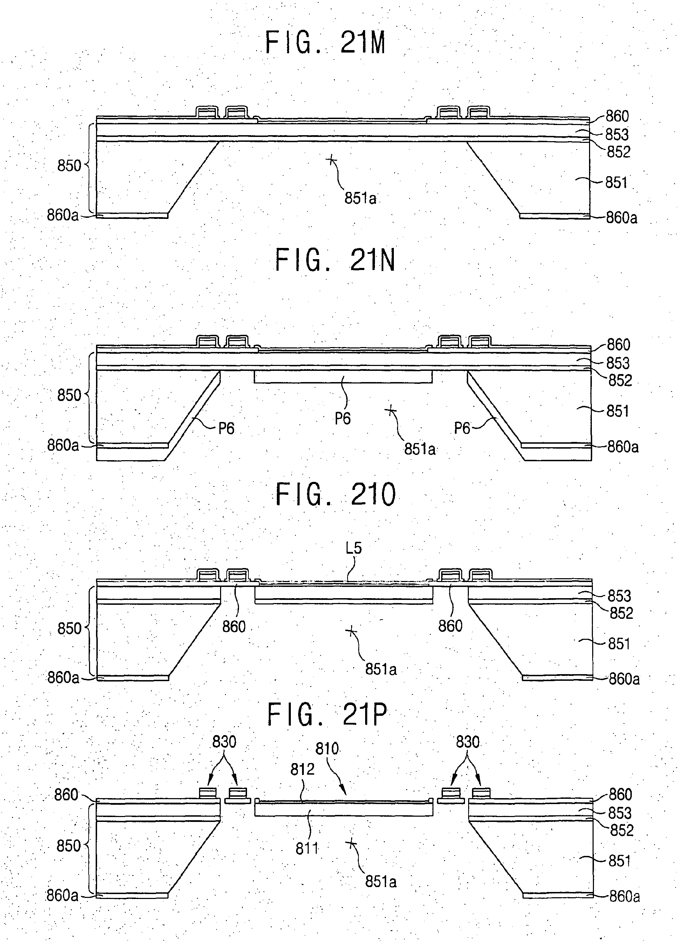

Figures 21a to 21p are sectional views illustrating one embodiment of a method for producing the variable optical attenuator in a producing order respectively. And, the same number will be given to the same components as those in Figures 16, 17 and 18.

In a method for producing the variable optical attenuator, as shown in Figure 21a, a substrate, a silicon wafer with a certain thickness onto which an embedded insulated film layer and a silicon thin film layer are formed is made as a raw material, and at front and back surfaces of the substrate 850, a low-stress insulated thin film layer 860 is patterned. For the low-stress insulated thin film layer 860, a low-stress silicon nitride film whose residual stress is minimized may be used.

In addition, the upper silicon thin film layer 853 reduces a transformation of a mirror surface, and is used to form a mirror plate 811 for restraining a micro mirror part 810 from being transformed in proportion to a stress applied thereto by a piezoelectric actuator part 830 in operation of the micro mirror part 810. Therefore, as adjusting the thickness of the upper silicon thin film layer 853, a thickness of the micro mirror part 810 is adjusted.

As shown in Figure 21b, in order to fabricate a piezoelectric material capacitor embedded between upper and lower metals on an upper surface of a low-stress insulated thin film layer 860 formed on an upper surface of the substrate, a lower electrode (L1) formed of Pt or the like, a piezoelectric material (L2) formed of PZT or the like and an upper electrode (L3) formed of Pt, RuO2 or the like are laminated in a thin film form with a predetermined thickness. Then, in order to pattern the piezoelectric material capacity, a material for a hard mask (M1) layer is patterned on the upper electrode (L3), and a photoresist film layer (P1) is spin-coated thereon, and then, is patterned using a photolithography process. The material for the hard mask (M1) will function as an etching mask in fabricating the piezoelectric capacity.

As shown in Figure 21c, a thin film layer for a piezoelectric material etching mask exposed through the photoresist film shape is eliminated using the methods of dry etching, wet chemical etching or the like. Then, by eliminating the photoresist film layer remaining on the substrate surface, a piezoelectric material capacitor etching mask (M2) is patterned.

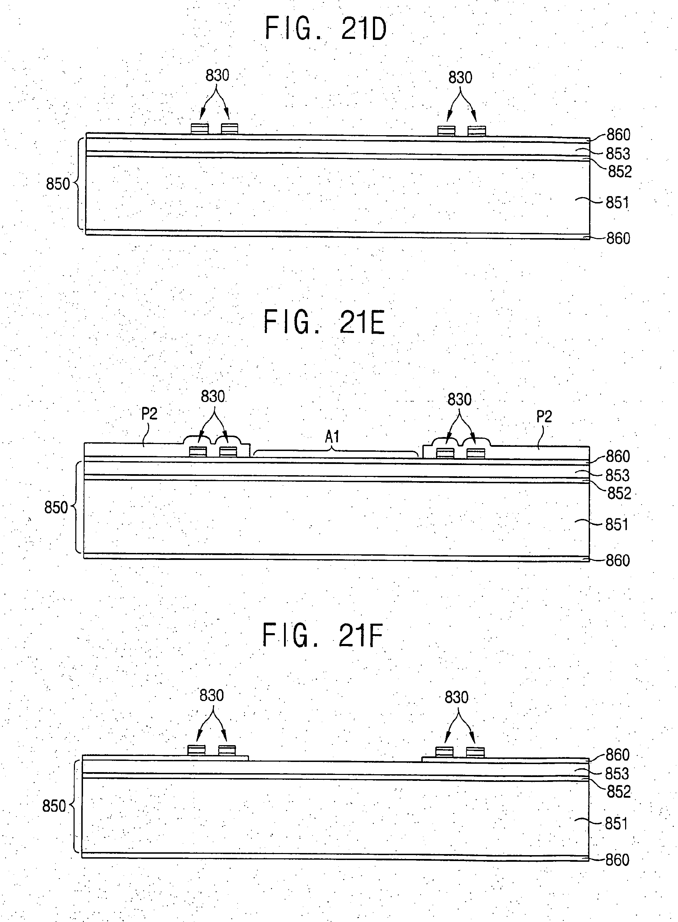

As shown in Figure 21d, by sequentially etching the metal thin film layer (L3) for an upper electrode, the piezoelectric material (L2) and the metal thin film layer (L1) for a lower electrode which are exposed through the shape of the etching hard mask, a shape of a piezoelectric material capacitor etching mask (M2) is fabricated.

As shown in Figure 21e, a photoresist film layer (P2) to be used as an etching mask for eliminating a portion (A1 ) of a low-stress insulated thin film layer 860 where a micro mirror part 810 will be formed, is patterned by a photolithography process.

As shown in Figure 21f, the exposed area of the low-stress insulated thin film layer 860 is defined so that a predetermined area of the silicon thin film layer 853 where a flat reflection surface 812 will be formed is defined. Then, the exposed low-stress insulated thin film layer 860 is eliminated, and the photoresist film layer (P2) is eliminated too.

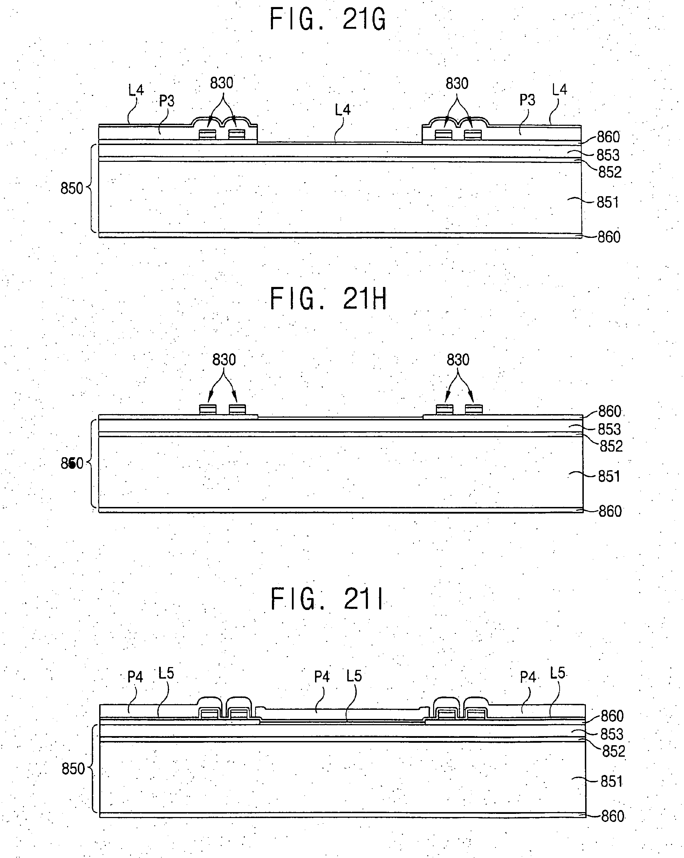

As shown in Figure 21 g, in order to implement an area to be used as a reflection surface 812 by a lift-off method, a photoresist film layer (P3) is spin-coated and patterned by a photolithography process. On the patterned photoresist film layer, a metal thin film layer L4 for patterning a mirror reflection film layer formed of gold, aluminum or the like for providing a mirror surface with a high reflectivity, is deposited.

As shown in Figure 21 h, in order to eliminate a metal thin film layer for patterning a reflection film layer except a micro mirror part 810 by melting the photoresist film layer with an acetone or solvent kind of chemicals, the micro mirror part reflection film layer 812 is patterned.

As shown in figure 21i, a metal thin film layer L5 formed of chrome or the like which is used as an etching hard mask in a release process which will be processed later, is deposited thereon. Then, a photoresist film (P4) shape for patterning the metal thin film layer L5 is patterned by a photolithography process.

The release process is that a slit line 833 is formed at the substrate so as to form a piezoelectric actuator part and a torsion hinge portion 820, that is, one portion of the substrate is eliminated, so that the micro mirror part 810 suspended at portions of the torsion hinge portion 820 and the piezoelectric actuator part 830, can freely moved.

As shown in Figure 21j, the metal thin film layer (L5) for the etching hard mask, which is exposed through the photoresist film layer (P4) is eliminated by one of wet etching and dry etching such as reactive ion etching and thus a release etching mask (L5-1) is patterned at an upper surface of the substrate in advance.

As shown in Figure 21k, a photoresist film layer (P5) is patterned by a photolithography process at a lower surface of the low-stress insulated thin film layer 860 formed at the silicon wafer 851 of the substrate.

As shown in Figure 21l, the low-stress insulated thin film layer 860 which is exposed through the photoresist film layer (P5) is etched until the silicon wafer 851 is exposed, and the remaining photoresist film layer is eliminated, so that a mask 860a for etching the silicon wafer is patterned.

As shown in Figure 21m, an upper surface of the substrate where the piezoelectric material or the like is patterned, is protected, and the silicon wafer 851 which is exposed through the mask pattern for etching the lower portion thereof is etched in alkali aqueou solution such as KOH (potassium hydroxide), EDP (ethylenediamine), TMAH (tetramethyl ammonium hydroxide) or the like, so that a cavity 851 a is formed. Using an etch stop characterization which is that an etching ratio is remarkably decreased if such etching is progressed and thus an embedded insulated film layer 852 is exposed, a shape of the cavity 851 can be uniformly etched.

As shown in Figure 21n, a photoresist film layer is spin-coated to the inside of the etched cavity 851 a and a lower surface of the substrate 850, and a photoresist film layer (P6) for an mirror plate etching mask is patterned by a photolithography technology.

As shown in Figure 21o, the embedded insulated film layer 852 and the silicon thin film layer 853 which are exposed through the photoresist film layer (P6), are etched from the lower portion of the substrate 850 and eliminated, and the low-stress insulated thin film layer 860 of the substrate surface is exposed. Then, the remaining photoresist film layer is eliminated.

As shown in Figure 21p, the low-stress insulated thin film layer 860 exposed through a release etching mask pattern which has already been patterned at an upper surface of the substrate, is etched from the upper part of the substrate, and eliminated, and the remaining release etching hard mask material is eliminated. Herein, portions of the micro mirror part 810, the piezoelectric actuator part 830 having a cantilever form, the torsion hinge portion 820 and the like suspend from a portion of the substrate 850.

A plurality of completed piezoelectric actuator micro mirror devices passed through the process above, that is a variable optical attenuator devices are isolated into an individual device using a dicing process, and an optical axis of each optical attenuator device, input optical fiber 200 and output optical fiber is aligned so that the three of them are at a predetermined angle. In this way, the components are assembled in a package thereby implementing an optical receiver.

A lens which can focus laser, may be added between input/output optical fibers and the micro mirror part, or the function of lens may be added to the input and output optical fibers. At the package, an optical fiber-fixed portion that makes the input/output optical fibers symmetrically aligned at a predetermined angle on the basis of a virtual axis which is at a right angle to a reflection surface of a piezoelectric actuation micro mirror part, may be included.

Using the producing method described above, a variable optical attenuator and an optical receiver having the variable optical attenuator as a component therefor can be extremely finely produced, a unit cost in producing is inexpensive, and the variable optical attenuator or the optical receiver using the variable optical attenuator can be mass-produced.

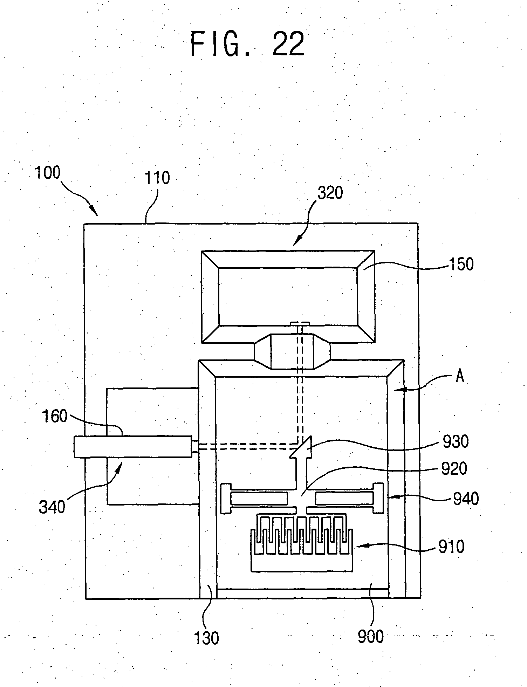

As shown in Figure 22, an optical transmitter using a variable optical attenuator according to the present invention includes a base member 100 formed in a predetermined shape; an optical diode 320 mounted at one side of the base member 100, and emitting an optical signal; an output optical fiber 340 mounted at one side of the base member 100, and receiving an optical signal; and a variable optical attenuator A actuated by an electrostatic force, changing a path of laser emitted from the optical diode 320, and thus adjusting optical power transmitted to the output optical fiber 340.

The base member 100 includes an variable optical attenuator-mounted portion 130 formed at one side of a plate portion 110 having a quadrangular form with a certain thickness, and at which the variable optical attenuator is mounted; a diode-mounted portion 150 formed at a side portion of the variable optical attenuator-mounted portion 130, and at which the optical diode 320 is mounted; and an optical fiber-fixed portion 160 formed at a side portion of the variable optical attenuator-mounted portion 130, and at which the output optical fiber 340 is mounted. The diode-mounted portion 150 is formed in a quadrangular form having a certain depth. The variable optical attenuator-mounted portion 130 is formed in a quadrangular form having a certain depth, and one side thereof is opened. The optical fiber-fixed portion 160 is formed in a penetrated form having a certain width and a depth, and is positioned at a right angle to the diode-mounted portion 150.

The variable optical attenuator A includes a substrate portion 900 having a certain thickness and an area; a linear actuator part 910 formed at the substrate portion 900, and generating a linear actuation force by an electrostatic force; a body portion 920 isolated from the substrate portion 900, extended from one side of the linear actuator part 910, and moved by the linear actuator part 910; a micro mirror part 930 extended from one side of the body portion 920, and reflecting laser emitted from the optical diode 320 according to a movement of the body portion 920; and an elastically supporting portion formed at the substrate portion 900, and elastically supporting the body portion 920.

Components of the variable optical attenuator A are integrally formed, and the variable optical attenuator A whose components are integrally formed is produced by a MEMS technology.

The variable optical attenuator A is fixedly coupled with the variable optical attenuator-mounted portion 130 of the base member, the output optical fiber 340 is fixedly coupled with the optical fiber-fixed portion 160 of the base member, and the optical diode 320 is fixedly coupled with the diode-mounted portion 150 of the base member.

Operations of an optical transmitter using the variable optical attenuator according to the present invention will now be described.

In a state that the variable optical attenuator A is not in operation, when an optical signal is transmitted from the optical diode 320, the optical signal is reflected by the variable optical attenuator A, and thus the entire optical power is transmitted to the output optical fiber 340. And, when the linear actuator part 910 of the variable optical attenuator is operated by an electrostatic force, while an optical path of the optical signal transmitted from the optical diode 320 is changed and is made to be incident to the output optical fiber 340, a part of optical power transmitted from the optical diode 320 is transmitted to the output optical fiber 340. That is, a path of laser emitted from the optical diode 320 by the operation of the variable optical attenuator A is changed and transmitted to the output optical fiber 340 thereby adjusting emitted optical power.

An optical receiver using a variable optical attenuator may be implemented into a multi type optical receiver. The multi type optical receiver is that an optical receiver using the variable optical attenuator is made as one unit, and a plurality of units is aligned. In addition, an optical transmitter using a variable optical attenuator may be implemented into multi type optical transmitter in the same manner as the multi type optical receiver.

Hereinafter, operational effect of an optical receiver, an optical transmitter and a producing method thereof using a variable optical attenuator according to the present invention will now be described.

In the present invention, components constituting a variable optical attenuator for attenuating laser are integrally formed, and the variable optical attenuator whose components are integrally formed can be produced at a fine size by a MEMS technology whereby the size thereof is extremely small, and mass production thereof is possible. Therefore a unit cost can be remarkably in producing the variable optical attenuator, the variable optical attenuator is actuated with a small electric energy thereby reducing consumed electric power. In addition, the attenuator can be actuated at a high-speed thereby remarkably reducing wave length and polarization dependency, so that it can be minimized that a signal is distorted in a long-distance optical fiber network.

Accordingly, the variable optical attenuator can be applied to a various devices such as an optical output controller, an optical signal adjusting multiplexer, an optical signal connector or the like on an optical network adopting a wave division multiplexing method.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

The features of the description, the claims and the drawings, single or in any combination, are patentable, as far as not excluded by the prior art. Each claim can depend on any one or more of the other claims.

## Claims

1. An optical receiver using a variable optical attenuator comprising:
a base member formed in a predetermined shape;
an input optical fiber emitting an optical signal toward the base member
an optical receiving means provided at one side of the base member, and receiving an optical signal; and
a variable optical attenuator actuated by an electrostatic force, changing a path of laser emitted from the input optical fiber, and thus adjusting optical power made to be incident to the optical receiving means.

2. The receiver of claim 1, wherein the base member comprises:
a plate portion having a certain thickness and an area;
an optical receiving means-mounted portion formed at one side of the plate portion so as to have a certain area and a depth, and at which the optical receiving means is mounted;
a variable optical attenuator-mounted portion formed at a side portion of the optical receiving means-mounted portion so as to have a certain shape and a depth, and at which the variable optical attenuator is mounted; and
an optical path groove making the optical receiving means-mounted portion and the variable optical attenuator-mounted portion communicate with each other, and thus through which laser passes.

3. The receiver of claim 1, wherein the optical receiving means comprises:
a block for fixing an optical diode which is fixed at the base member; and
an optical diode provided at an optical diode active area where laser is receiving, and mounted at the block for fixing the optical diode.

4. The receiver of claim 1, wherein the base member comprises:
a plate portion having a certain thickness and an area;
a variable optical attenuator-mounted portion formed at one side of the plate portion so as to have a certain shape and a depth, and at which the variable optical attenuator is mounted; and
a fixed mirror part formed at one side of the plate portion, and reflecting laser reflected by the variable optical attenuator to the optical receiving means mounted at the base member.

5. The receiver of claim 4, wherein the fixed mirror part is an optical channel with a certain width and a depth is formed at the plate portion to communicate with the variable optical attenuator-mounted portion, wherein one side surface of the optical channel is an inclined reflection surface.

6. The receiver of claim 1, wherein a lens for focusing laser to the input optical fiber and the optical receiving means is provided.

7. The receiver of claim 1, wherein the variable optical attenuator comprises:
a substrate portion having a certain area;
an optical fiber-fixed portion formed at one side of the substrate portion, and at which the input optical fiber is fixed;
a linear actuator part formed at the substrate portion, and generating a linear actuating force by an electrostatic force;
a body portion isolated from the substrate portion, extended from one side of the linear actuator part, and moved by the linear actuator part;
a micro mirror part extended from one side of the body portion, and reflecting laser emitted from the input optical fiber according to a movement of the body portion; and
an elastically supporting portion formed at the substrate portion, and elastically supporting the body portion.

8. The receiver of claim 7, wherein the optical fiber-fixed portion is formed so that the input optical fiber fixed at the optical fiber-fixed portion is at a right angle to the optical receiving means.

9. The receiver of claim 7, wherein the reflection surface of the micro mirror part is formed inclined at an angle of 45 to a path of laser emitted from the input optical fiber.

10. The receiver of claim 7, wherein the elastically supporting portion comprises;
projections formed at the substrate portion, and positioned at both sides of the body portion respectively; and
a plurality of leaf springs isolated from the substrate portion, and connecting the projections and the body portion.

11. The receiver of claim 7, wherein components of the variable optical attenuator are integrally formed, and the variable optical attenuator is produced by a MEMS technology.

12. The receiver of claim 1, wherein the variable optical attenuator comprises;
a substrate portion having a certain area;
an optical fiber-fixed portion formed at one side of the substrate, and at which the input optical fiber is fixed;
a rotary actuator part formed at the substrate portion, and generating an angular movement by an electrostatic force;
a micro mirror part extended from the rotary actuator part, and reflecting laser emitted from the input optical fiber while making angular movement according to the actuation of the rotary actuator part; and
an elastically supporting portion formed at the substrate portion, and elastically supporting the rotary actuator part.

13. The receiver of claim 12, wherein the optical fiber-fixed portion is formed so that the input optical fiber fixed at the optical fiber-fixed portion is at a right angle to the optical receiving means.

14. The receiver of claim 12, wherein the reflection surface of the micro mirror part is formed inclined at an angle of 45 to a path of laser emitted from the input optical fiber.

15. , The receiver of claim 12, wherein the rotary actuator part comprises:
a fixed electrode comprising a plurality of circular arc comb teeth formed in a circular arc form and at a certain interval therebetween and an inclination type comb teeth connected with one side end of the circular arc comb teeth; and
a movable electrode comprising circular arc teeth movably positioned between the circular arc comb teeth of the fixed electrode, and a connecting shaft connected with the circular arc comb teeth, and connected with the micro mirror part.

16. The receiver of claim 12, wherein the electrically supporting portion comprises a projection projected from the substrate portion, and a leaf spring isolated from the substrate portion, and connected with an actuation side of the rotary actuator portion.

17. The receiver of claim 12, wherein components of the variable optical attenuator are integrally formed, and the variable optical attenuator is produced by a MEMS technology.

18. The receiver of claim 12, wherein the reflection surface of the micro mirror part is formed inclined to a path of laser emitted from the input optical fiber.

19. The receiver of claim 1, wherein the variable optical attenuator comprises:
a substrate portion having a certain area;
an optical fiber-fixed portion formed at one side of the substrate portion, and at which the input optical fiber is fixed;
a micro shutter part movably positioned between the input optical fiber and the optical diode of the optical receiving means, and controlling that laser emitted from the input optical fiber is introduced to the optical receiving means;
an actuator part moving the micro shutter part; and
an elastically supporting portion elastically supporting the micro shutter part.

20. The receiver of claim 19, wherein the optical fiber-fixed portion is formed so that the input optical fiber fixed at the optical fiber-fixed portion and the optical receiving means are collinearly aligned.

21. The receiver of claim 19, wherein the actuator part generates a linear actuation force or a rotary actuation force by an electrostatic force.

22. The receiver of claim 19, wherein the micro shutter part moves in a vertical direction to the collinear alignment of the optical fiber-fixed portion and the optical receiving means.

23. The receiver of claim 19, wherein components of the variable optical attenuator are integrally formed, and the variable optical attenuator is produced by a MEMS technology.

24. The receiver of claim 1, wherein the variable optical attenuator comprises;
a substrate portion having a certain area;
an optical fiber-fixed portion formed at one side of the substrate portion, and at which an input optical fiber is fixed;
an incidence side mirror part reflecting laser emitted from the input optical fiber;
an emission side mirror part reflecting laser reflected from the incidence side mirror part to the optical receiving means;
an actuator part actuating the incidence side mirror part or the emission side mirror part and thus adjusting a reflection angle of laser reflected to the optical receiving means; and
an elastically supporting portion elastically supporting the incidence side mirror part or the emission side mirror part actuated by the actuator part.

25. The receiver of claim 24, wherein the optical fiber-fixed portion is formed so that an input optical fiber mounted at the optical fiber-fixed portion is parallel to the optical receiving means.

26. The receiver of claim 24, wherein the incidence side mirror part and the emission side mirror part are integrally formed, the incident side mirror part and the emission side mirror part which are integrally formed, are connected with the actuator part to be linearly moved, and the elastically supporting portion comprises a projection projected from the substrate portion and a leaf spring isolated from the substrate portion and elastically connecting the projection and the incidence side mirror part.

27. The receiver of claim 26, wherein a reflection surface of the incidence side mirror part is at an angle of 90 to a reflection surface of the emission side mirror part.

28. The receiver of claim 24, wherein the emission side mirror part is extended and projected from the substrate portion, the incidence side mirror part is movably connected to the actuator part, and the elastically supporting portion comprises a projection formed at the substrate portion, and positioned at both sides of the incidence side mirror part respectively, and leaf spring connecting the incidence side mirror part and the projection respectively and elastically supporting the incidence side mirror part.

29. The receiver of claim 28, wherein a reflection surface of the incidence side mirror part is at an angle of 90 to a reflection surface of the emission side mirror part.

30. The receiver of claim 24, wherein components of the variable optical attenuator are integrally formed, and the variable optical attenuator is produced by a MEMS technology.

31. The receiver of claim 1, wherein the variable optical attenuator comprises:
a substrate portion having a certain thickness and an area;
a micro mirror part positioned at the inside of the substrate portion and reflecting laser emitted from the input optical fiber;
a torsion hinge portion connecting the micro mirror part 810 to the substrate portion so that the micro mirror part can makes a tilting actuation; and
a piezoelectric actuator part positioned at the substrate portion, having the micro mirror part make a tilting rotation by a piezoelectric actuation, and thus adjusting a reflection angle of laser reflected to the optical receiving means.

32. The receiver of claim 31, in order to offset a residual stress of the micro mirror part 810, on the basis of the torsion hinge portions, on the opposite side of the piezoelectric actuator part, a dummy part having the same shape as the piezoelectric actuator part is provided.

33. The receiver of claim 31, wherein the input optical fiber and the output optical fiber are aligned respectively so as to be symmetrical on the basis of a vertical axis to a reflection surface 812 of the micro mirror part 810.

34. A method for producing a variable optical attenuator comprising:
forming a substrate, a silicon wafer onto which an embedded insulated film layer and a silicon thin film layer are patterned;
patterning a low-stress insulated thin film layer at upper/lower surfaces of the substrate;
forming a piezoelectric actuator part consisting of a capacitor and upper and lower electrodes by sequentially patterning a conductive lower thin film layer, a piezoelectric thin film layer and a conductive upper thin film layer on the low-stress insulated thin film layer patterned on the upper surface of the substrate;
eliminating the low-stress insulated thin film layer so as to have a predetermined area at the inside of the substrate;
patterning a reflection surface of a mirror part at the predetermined area where the low-stress insulated thin film layer has been eliminated;
completing a micro mirror part by etching a certain area of a lower substrate, which will be the reflection surface of the mirror part; and
patterning a torsion hinge portion supporting the micro mirror part.

35. The method of claim 34, in said completing the micro mirror part, a lower low-stress insulated thin film layer, the silicon wafer and the embedded insulated film layer are etched whereby the micro mirror part is formed of the reflection surface and a silicon thin film layer.

36. The method of claim 34, wherein the torsion hinge portion is formed of the upper low-stress insulated thin film layer.

37. An optical transmitter using a variable optical attenuator comprising:
a base member formed in a predetermined shape;
an optical diode mounted at one side of the base member, and emitting an optical signal;
. an output optical fiber mounted at one side of the base member, and receiving an optical signal; and
a variable optical attenuator actuated by an electrostatic force, changing a path of laser emitted from the optical diode, and thus adjusting optical power transmitted to the output optical fiber.

38. The transmitter of claim 37, wherein the variable optical attenuator comprises:
a substrate portion having a certain thickness and an area;
a linear actuator part formed at the substrate portion, and generating a linear actuating force by an electrostatic force;
a body portion isolated from the substrate portion, extended from one side of the linear actuator part, and moved by the linear actuator part;
a micro mirror part extended from one side of the body portion, and reflecting laser emitted from the optical diode according to a movement of the body portion; and
an elastically supporting portion formed at the substrate portion, and elastically supporting the body portion.
